# EUROPEAN PATENT APPLICATION

(11) **EP 1 821 249 A1**
(43) Date of publication of application: **22.08.2007**
(21) Application number: 06007404.4
(22) Date of filing: 07.04.2006
(51) Int. Cl.: G06Q 20/00, G07F 7/08

(54) **Technique for interconnecting card payment networks**

(30) Priority: 14.02.2006 EP 06002940; 14.02.2006 EP 06002939
(71) Applicant: Lufthansa AirPlus Servicekarten GmbH, 63263 Neu-Isenburg (DE); Orbiscom Ltd., Dublin (IE)
(72) Inventor: Draisbach, Martin, 63329 Egelsbach (DE); Klar, Marion, 65719 Hofheim (DE); Flitcroft, Ian, Co. Dublin (IE); Lyons, Garry, Dublin 16 (IE)
(74) Representative: Röthinger, Rainer

(57) **Abstract**

A technique for interconnecting card payment networks (16, 24) in context with a card payment transaction involving at least a first card payment network (16) and a second card payment network (24) is described. In one variation, the technique includes an authorization method in which, via the first card payment network (16), an authorization request including a limited-use credit card number that has been issued for use in the first card payment network (16) is received. The limited-use credit card number is associated with a master credit card number that has been issued for use in the second card payment network (24). This association allows for a determination of the master credit card number that is associated with the limited-use credit card number. The determined master credit card number is then included in the authorization request and the authorization request thus generated is forwarded towards the second card payment network (24).

## Description

### Field of the Invention

The invention generally relates to credit card systems. In particular, the invention relates to a technique for interconnecting two or more card payment networks in a secure and resource-efficient manner.

### Background of the Invention

In the early days of retail electronic commerce, one major limiting factor to a widespread adoption of this purchase vehicle were inadequate payment techniques. Conventional payment techniques such as account transfers were generally paper-based or required the installation of specific banking software. These payment techniques were therefore difficult to incorporate into an electronic purchase process.

Retail electronic commerce started to become increasingly accepted as electronic payment techniques were integrated into online shopping portals. One well known electronic payment technique that can nowadays be found in almost every online shopping portal is credit card payment. A customer wishing to pay for online-ordered goods or services simply enters his credit card details into an online form. Among the credit card details that typically have to be provided are the credit card type (such as MasterCard® or VISA®), the credit card holder, the credit card number, the expiry data of the credit card, and a credit card verification code. Upon confirmation of the credit card details by the customer, the credit card details are transferred together with transaction details (such as the purchase price) to the credit card company to initiate a conventional credit card payment transaction.

Once initiated, the credit card payment transaction is processed in an electronic card payment network of the credit card company. This processing can include authorization processing, settlement processing, and other processing operations. During authorization processing, for example, it is usually checked whether the credit card number exists at all, whether the credit card has expired, and whether the entered credit card verification code is correct. During settlement processing, the purchase price is transferred to the account of the merchant and the credit card account is debited accordingly.

In order to be in a position to accept a particular credit card type from a customer, a merchant operating a specific online shopping portal requires an agreement with the particular credit card company. This requirement often leads to the situation that a particular shopping portal offers only a limited selection of credit card types that will be accepted. In other words, a customer having a credit card of a type that is not accepted will be prevented from concluding his purchase.

This situation is sub-optimal both for the customer, who is denied an online purchase, and for the merchant, who misses an opportunity to sell goods or services. It would therefore be desirable to increase the acceptance of credit cards in such a manner that a first credit card company agrees to extend its agreement with the merchant to a second credit card company, which then needs no separate agreement with the merchant. Smaller and lesser-known credit card companies would especially profit from such a scenario.

While a business solution to the problem of a deficiency of credit card acceptance is easy to achieve by mutual agreements between the two credit card companies, there remains the problem that their respective card payment networks have to be somehow interconnected to allow for a seamless processing of a card payment transaction involving the two card payment networks. The requirement for such an interconnection becomes evident from the following scenario. From an online shopping portal of a merchant not knowing about the agreement between the two credit card companies, a card payment transaction will always be routed into the card payment network of the credit card company that has an agreement with the merchant. However, the authorization and settlement processing will finally have to take place in the card payment network of the other credit card company that holds the actual customer details and the customer account.

Accordingly, there remains a need for a secure and resource-efficient interconnection of two card payment networks.

### Summary of the Invention

According to a first aspect of the invention, this need is satisfied by a method of authorizing a payment transaction involving a first card payment network and a second card payment network, wherein the method comprises receiving, via the first card payment network, an authorization request including a limited-use credit card number that has been issued for use in the first card payment network, wherein the limited-use credit card number is associated with a master credit card number that has been issued for use in the second card payment network, determining the master credit card number that is associated with the limited-use credit card number, inserting the master credit card number in the authorization request, and forwarding the authorization request including the master card number towards the second card payment network.

According to this approach, the association between the limited-use credit card number that has been issued for use in the first card payment network and the master credit card number that has been issued for use in the second card payment network is used as a vehicle for interconnecting the two card payment networks. Additionally, the limited-use credit card number adds a layer of security to the card payment transaction as the exposure of the master credit card number to public (and potentially insecure) networks such as the Internet can often be avoided or at least reduced.

The limited-use credit card number may be used for various purposes within the first card payment network. In one scenario, the limited-use credit card number is used for routing the authorization request into, within and/or out of the first card payment network. In this context it may be determined if the authorization request is to be processed in the first card payment network or in the second card payment network. The determination is preferably performed within the first card payment network and based on the limited-use credit card number. To this end, a database may be provided (e.g. within the first card payment network) in which the limited-use credit card numbers for which there exists a respective master credit card number issued for use in the second card payment network are specifically identified.

If it is determined in the first card payment network that the authorization request is to be processed in the second card payment network, the authorization request may be routed to a component performing one or more of the method steps set forth above. This component may thus constitute a gateway between the first card payment network and the second card payment network. It may be situated within the first card payment network or outside both the first card payment and the second card payment network.

In addition to determining the master credit card number that is associated with the limited-use credit card number, an expiry date associated with the master credit card number may be determined. If required, further master credit card details such as a card verification code may be determined also. Each of the master credit card and the limited-use credit card may posses its own set of credit card details. The additionally determined master credit card details may also be inserted in the authorization request. In such a scenario, the authorization request received via the first card payment network preferably does not yet include the master credit card number or any further credit card details associated with the master credit card number. The received authorization request may, however, include an expiry date associated with the limited-use credit card number and any further information (such as a card verification code) specific to the limited-use credit card number.

The step of inserting the master credit card number, and any further credit card details associated with the master credit card number, in the authorization request may be performed such that the corresponding information relating to the limited-use credit card number is overwritten in the authorization request. However, the corresponding master credit card information may also be provided in addition to the corresponding limited-use credit card information in the authorization request.

The limited-use credit card number may be checked with regard to its use limitations. These use limitation may include at least one of a predefined number of possible uses and a predefined period of use. If, in relation to the use limitations, it is determined that the limited-use credit card number is not or no longer valid, a corresponding rejection message may be generated and sent. If the use limitations are checked by a component performing one or more of the method steps set forth above, the rejection message may be sent to or within at least one of the first card payment network and the second card payment network.

According to another aspect of the invention, a further method of authorizing a card payment transaction involving a first card payment network and a second card payment network is provided that can optionally be combined with one or more of the method steps outlined above. The method comprises receiving an authorization response including a master credit card number that has been issued for use in the second card payment network, wherein the master credit card number is associated with a limited-use credit card number that has been issued for use in the first card payment network, determining the limited-use credit card number that is associated with the master credit card number, inserting the limited-use credit card number in the authorization response, and forwarding the authorization response including the limited-use credit card number towards the first card payment network.

When determining the limited-use credit card number associated with the master credit card number, further details associated with the limited-use credit card such as an expiry date, a card verification code, etc. may be determined. These details of the limited-use credit card may then be inserted together with the limited-use credit card number in the authorization response. Prior to forwarding, one or more of the corresponding details of the master credit card such as a master credit card number, an expiry date associated with the master credit card number and a card verification code associated with the master credit card number may be removed from the received authorization response (e.g. by way of overwriting). The removal of master credit card details from the authorization response is a security feature that prevents or at least reduces the disclosure of these sensitive details upon forwarding the authorization response through a public network or to a potentially unsecure component. The disclosure of the corresponding details of the limited-use credit card is much less critical due to the corresponding use limitations.

The authorization response including the limited-use credit card number and, optionally, further limited-use credit card details and authorization information may be routed via the first card payment network to a component that requested authorization of the card payment transaction. This component may be a component of the first card payment network or, in the alternative, it may be coupled to the first card payment network via a third network or any other communication link. The third network can be a public network such as the Internet or non-public network.

The authorization processing is preferably performed by a component of the second card payment network. Authorization processing is initiated upon receipt, within the second card payment network, of the authorization request including the master credit card number. The authorization request may further include transaction data relating to the card payment transaction that is to be authorized. This transaction data typically includes one or both of a monetary transaction value and an identifier indicative of a requestor of the authorization (such as a merchant).

After receipt of the authorization request, an authorization of the card payment transaction is evaluated based on at least one of the master credit card number and the transaction data included in the authorization request. This evaluation may include an evaluation, based on the monetary transaction value, if a settlement of the card payment transaction that is to be authorized would exceed a predefined account limit associated with the master credit card number. Additionally, or in the alternative, the evaluation may include evaluating, based on the identifier of the authorization requestor, if the requestor is eligible for the card payment transaction. Based on a result of the evaluation, the authorization response is generated and eventually sent out of the second card payment network.

According to another aspect of the present invention, a method of generating a limited-use credit card number for a card payment transaction involving a first card payment network and a second card payment network is provided. This method, which can be combined with one or more of the authorization steps outlined above, comprises receiving, via a communication link such as a third (public or non-public) network, a generation request for generation of a limited-use credit card number for use in the first card payment network, the generation request being associated with a master credit card number that has been issued for use in a second card payment network, generating the requested limited-use credit card number, and forwarding the limited-use credit card number via the communication link. The limited-use credit card number is typically forwarded, via the communication link, to a component that requested the generation of the limited-use credit card number.

When generating the requested limited-use credit card number, an association between the generated limited-use credit card number and the corresponding master credit card number may be generated. This association may be stored in a database (or in any other way) for later use.

In addition to the limited-use credit card number, further limited-use credit card details such as an expiry date and a card verification code (typically a random number) may be generated. These additional limited-use credit card details may then also be forwarded to the component that requested generation of the limited-use credit card number.

In one variation, generation of the requested limited-use credit card number may be preceded by a screening operation. For screening purposes, a screening request including the master credit card number is sent towards the second card payment network. Then, a screening response is received from the second card payment network and the screening response is evaluated. Only in the case of a positive screening response, the limited-use credit card number will be generated.

From the perspective of the second card payment network, the screening request including the master credit card number is received in a first step. In a next step, it is determined whether the received master credit card number is eligible for generation of a limited-use credit card number for use in the first card payment network. Then, the screening response is created based on a result of the determination.

In some scenarios it may be desirable to obtain user-specific data. This user-specific data may for example be required by the second card payment network for generating user account statements in accordance with specific requirements of a particular user. To obtain the required user-specific data, a request for user-specific data may be sent to the component that requested generation of the limited-use credit card number. In a further step, the user-specific data are received from the component and the received user-specific data are assigned to the generated limited-use credit card number.

For obtaining the user-specific data, a set of user-specific data fields associated with the master credit card number may be determined within the second card payment network. The request for user-specific data may then be generated such that the request includes a specification of the user-specific data fields associated with the master credit card number.

From the perspective of a component located outside the second card payment network, the step of sending the request for user-specific data to the another component may comprise receiving the request for user-specific data via the second card payment network, and forwarding the request for user-specific data received via the second card payment network to the other component. The request for user-specific data received from the second card payment network is preferably included in the generation response.

After the request for user-specific data has been sent, the requested user-specific data may be received and collected. The received user-specific data are preferably collected together with the respectively assigned limited-use credit card number in a database. The collected user-specific data may later be transferred together with the respectively assigned limited-use credit card number towards the second card payment network. The transfer may be performed in a batch process or in a continuous manner.

The present invention may be practised in the form of a piece of software, in the form of one or more hardware components, or as a combined software/hardware solution. According to a software aspect, a computer program product is provided. The computer program product comprises program code portions for performing the method steps when the computer program product is run on one or more computing devices. The computer program product may be stored on a computer readable recording medium.

As for a hardware aspect, a device for controlling an authorization process relating to a card payment transaction involving a first card payment network and a second card payment network is provided. The device comprises an interface adapted to receive, via the first card payment network, an authorization request including a limited-use credit card number that has been issued for use in the first card payment network, wherein the limited use credit card number is associated with a master credit card number that has been issued for use in the second card payment network. Additionally, the device comprises a unit adapted to determine the master credit card number that is associated with the limited-use card number and to insert the master credit card number in the authorization request. Further, an interface adapted to forward the authorization request including the master credit card number towards the second card payment network is provided.

According to a further aspect, a device for controlling an authorization process relating to a card payment transaction involving a first card payment network and a second card payment network is provided. This device comprises, optionally in addition to the features of the device described above, an interface adapted to receive an authorization response including a master credit card number that has been issued for use in the second card payment network, wherein the master credit card number associated with a limited-use credit numbers that has been issued for use in the first card payment network, a unit adapted to determine the limited-use credit card number is associated with the master credit card number and to insert the limited-use credit card number in the authorization response, and an interface adapted to forward the authorization response including the limited-use credit card number towards the first card payment network.

According to a still further hardware aspect, a device for generating a limited-use credit card number for a card payment transaction involving a first card payment network and a second card payment network, in particular for use by any of the preceding devices, is provided. This device comprises an interface adapted to receive a generation request for generation of a limited-use credit card number for use in the first card payment network, the generation request being associated with a master credit card number that has been issued for use in the second card payment network, a generator adapted to generate the requested limited-use credit card number, and an interface adapted to forward the limited-use credit card number to a component that requested the generation of the limited-use credit card number.

One or more of the above devices may have access to at least one database for storing associations between limited-use credit card numbers and master credit card numbers. If required, further data associated with at least one of the limited-use credit card numbers and the master credit card numbers may be stored.

### Brief Description of the Drawings

In the following, the invention will be described in more detail with reference to exemplary embodiments illustrated in the drawings, wherein:
- Fig. 1: is a schematic diagram illustrating a first apparatus embodiment of the present invention;
- Fig. 2: is a schematic diagram illustrating a second apparatus embodiment of the present invention;
- Fig. 3: is a schematic diagram illustrating a third apparatus embodiment of the present invention;
- Fig. 4: is a schematic flowchart illustrating a first method embodiment of the present invention;
- Fig. 5: is a schematic flowchart illustrating a second method embodiment of the present invention;
- Fig. 6: is schematic flowchart illustrating a third method embodiment of the present invention;
- Fig. 7: is a schematic diagram illustrating a combined apparatus/messaging embodiment of the present invention in context with generating a limited-use credit card number;
- Fig. 8: is a schematic diagram illustrating a combined apparatus/messaging embodiment of the present invention in context with performing a card payment transaction;
- Fig. 9: is a schematic diagram illustrating a first graphical user interface for use in the embodiment shown in Fig. 7;
- Fig. 10: is a schematic diagram illustrating a second graphical user interface for use in the embodiment shown in Fig. 7;
- Fig. 11: is a schematic diagram illustrating a third graphical user interface for use in the embodiment shown in Fig. 7;
- Fig. 12: is a schematic diagram illustrating a fourth graphical user interface for use in the embodiment shown in Fig. 8; and
- Fig. 13: is a schematic diagram illustrating a fifth graphical user interface for use in the embodiment shown in Fig. 8.

### Detailed Description of the Preferred Embodiments

In the following description, for purposes of explanation and not limitation, specific details are set forth, such as particular sequences of method steps, specific messaging sequences and certain communication protocols in order to provide a thorough understanding of the present invention. It will be apparent to one skilled in the art that the present invention may be practised in other embodiments that depart from these specific details.

Moreover, those skilled in the art will appreciate that the functions explained herein below may be implement using software functioning in conjunction with a programmed microprocessor or general purpose computer, and/or using an application specific integrated circuit (ASIC). It will also be appreciated that while the current invention is primarily described in the form of methods and devices, the invention may also be embodied in a computer program product as well as in a system comprising a computer processor and a memory coupled to the processor, wherein the memory is encoded with one or more programs that may perform the functions disclosed herein.

In this specification the term "credit card" generally refers to credit cards as well as charge cards, debit cards and hybrids thereof. Although the terms "master credit card" and "master credit card number" refer to the credit card and the credit card number as generally understood, namely, that which is allocated by the credit card issuer to the customer for the respective customer account, it will be appreciated that an account may have many master credit cards in the sense of this specification. For example, a corporation may provide many of its employees with master credit cards. Each of these master credit cards will have a unique master credit card number, but the set of master credit card numbers will be linked to one customer account.

The terms "limited-use credit card" and "limited-use credit card number" are used herein in accordance with published European applications EP 1 029 311 A and EP 1 153 375 A, herewith incorporated by reference as far as the use, the generation, the content and other aspects of limited-use credit cards and limited-use credit numbers are concerned. Generally, a limited-use credit card is a credit card designated for a limited number of uses, for a limited period of use and/or subject to other use restrictions.

Furthermore, it will be appreciated that although the term "credit card" refers to a piece of plastic that carries various details in printed and/or machine-readable form, the invention does not require that the credit card, and in particular the "limited-use credit card", is actually existing in a material form. Accordingly, the term "credit card" is used in the present specification also for a set of credit card information for which no such piece of plastic has been issued.

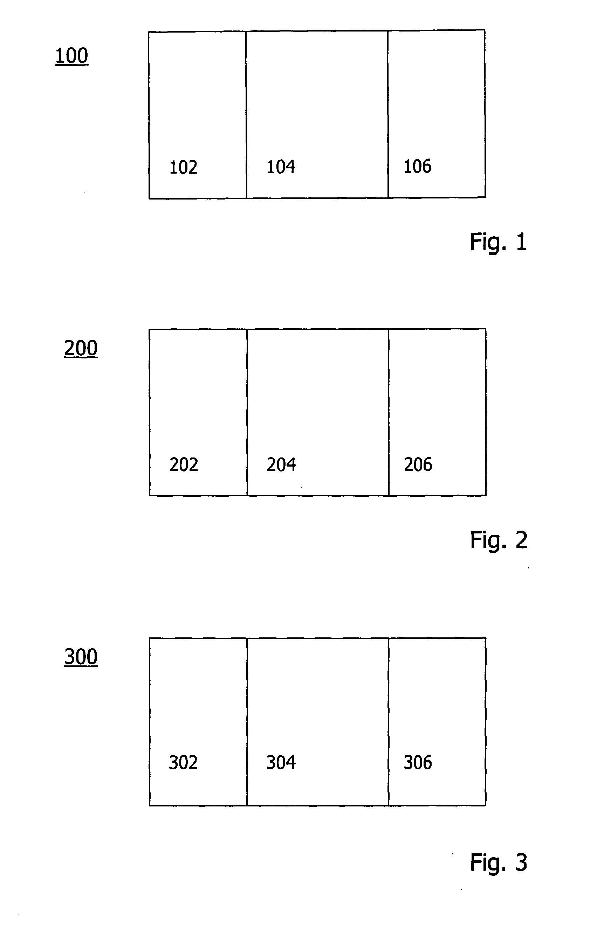

Referring now to Figs. 1 to 3, three devices 100, 200, 300 configured for interconnecting different card payment networks are shown. The devices 100, 200, 300 may belong to at least one card payment network. Alternatively, they may be external to each of the card payment networks that are to be interconnected. It should be noted that although the devices 100, 200, 300 are shown as separate entities, they could be integrated into a single device.

Referring now to Fig. 1, a device 100 for controlling an authorization process relating to a card payment transaction involving two or more card payment networks is shown. In the exemplary embodiment, the device 100 comprises a first interface 102 for being coupled to a first card payment network. The first interface 102 is configured for receiving, via the first card payment network, an authorization request including a limited-use credit card number that has been issued for use in the first card payment network. The limited-use credit card number is associated with a master credit card number that has been issued for use in a second card payment network.

The device 100 further includes a unit 104 adapted to determine the master credit card number that is associated with the limited-use credit card number. To this end, the unit 104 may further comprise storage means (not shown) in which master credit card numbers can be looked-up based on limited-used credit card numbers. The unit 104 is further adapted to insert the master credit card number thus determined in the authorization request received via the interface 102. This means that the authorization request received via the interface 102 may not (yet) include the master credit card number.

The device 100 shown in Fig. 1 additionally comprises a second interface 106 facing the second credit card payment network. The second interface 106 is configured to forward the authorization request including the master credit card number towards the second card payment network.

Fig. 2 shows an embodiment of a further device 200 for controlling an authorization process relating to a card payment transaction involving two or more card payment networks. Similar to the first device 100 shown in Fig. 1, the device 200 of Fig. 2 also comprises an interface 202 facing the second card payment network. The interface 202 is configured to receive, from the second card payment network, an authorization response including a master credit card number that has been issued for use in the second card payment network. The master credit card number is associated with a limited-use credit card number that has been issued for use in the first card payment network.

The device 200 additionally comprises a unit 204 adapted to determine the limited-use credit card number that is associated with the master credit card number. To this end, the unit 204 may comprise storage means (such as a database) for looking-up limited-use credit card numbers based on master credit card numbers. Once looked-up or otherwise determined, the unit 104 inserts the limited-use credit card number in the authorization response received via the interface 202.

Via a further interface 206, that is to be coupled to the first card payment network, the device 200 forwards the authorization response including the limited-use credit card number towards the first card payment network.

Referring now to Fig. 3, a device 300 for generating a limited-use credit card number for a card payment transaction involving two or more card payment networks is shown. The limited-use credit card number thus generated may be used by the devices 100, 200 shown in Figs. 1 and 2 for controlling an authorization process.

As can be gathered from Fig. 3, the device 300 comprises a first interface 302 for being coupled via a communication link such as a public or non-public network to another component such as a terminal. The interface 302 is adapted to receive a generation request for generation of a limited-use credit card number for use in a first card payment network. The generation request is associated (e.g. includes) a master credit card number that has been issued for use in a second card payment network. The device 300 further comprises an generator 304 that is adapted to generate the requested limited-use credit card number. The generator 304 may additionally be adapted to associate the generated limited-use credit card number with the master credit card number received via the interface 302. A further interface 306, that could be the same as the first interface 302, allows for a forwarding of the limited-use credit card number to the component that requested the generation of the limited-use credit card number.

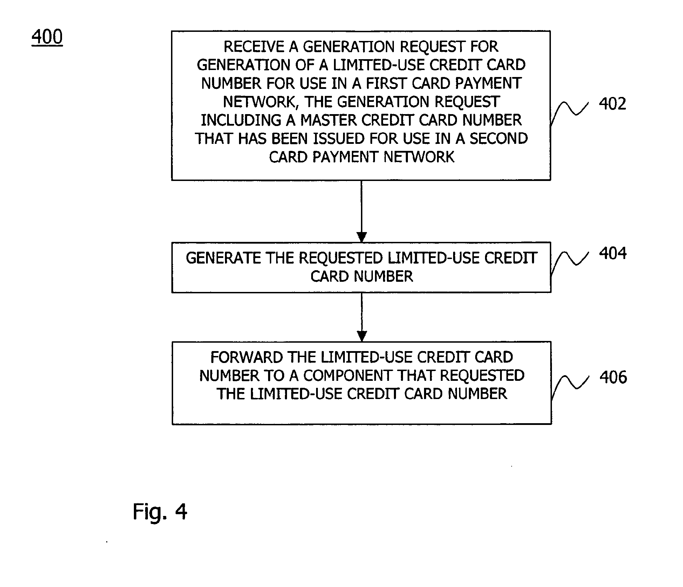

Now, an exemplary embodiment of a credit card transaction stretching between two card payment networks and involving an authorization process will exemplarily be described with reference to the flowcharts 400, 500, 600 of Figs. 4 to 6. It should be noted that the processes described hereinafter may be performed by one or more of the devices 100, 200, 300 shown in Figs. 1 to 3.

In context with the card payment transaction described hereinafter, an association between a limited-use credit card number that has been issued for use in a first card payment network and a master credit card number that has been issued for use in a second card payment network is used for interconnecting the card payment networks. For establishing such an association for an existing master credit card number, a limited-use credit card number will have to be generated first. Typically, the generation of a new limited-use credit card number is initiated by or for a user who wishes to order goods or services from an online shopping portal. In general, the operator of the online shopping portal (i.e. the merchant) will not have any knowledge of the fact that a certain card payment transaction is based on a limited-use credit card number. In other words, generation of a new limited-use credit card number can be performed separately from the online purchase and will generally not involve the online shopping portal.

Fig. 4 shows a schematic flowchart 400 of an embodiment relating to the generation of a new limited-use credit card number for an existing master credit card number. The method starts in step 402 with receiving, by an issuer of limited-use credit card numbers such as the device 300 shown in Fig. 3, a generation request relating to the generation of a new limited-use credit card number. The generation request is typically received from a terminal operated by or on behalf of a user wishing to purchase goods or services online. In the present embodiment, the corresponding card payment transaction will take place in a first payment network, while the existing master credit card number has been issued for use in a second card payment network. Accordingly, the limited-use credit card number that is to be newly generated will have to be a credit card number belonging to the first payment network. The generation request received in step 402, on the other hand, includes the master credit card number has been issued for use in the second card payment network.

In a next step 404, the requested limited-use credit card number for use in the first payment network is generated. Optionally, the generation of the requested limited-use credit card number may be dependent on an evaluation of the generation request and in particular on a screening of the master credit card number and/or any other master credit card details included in the generation request. Further optionally, the generated limited-use credit card number may be locally stored together with the corresponding master credit card number in a database for further use. This further use may include controlling authorizing operations as will be described in more detail below.

After generation of the requested limited-use credit card number in step 404, the newly created limited-use credit card number is forwarded to the terminal that requested the limited-use credit card number (step 406). Communication between the terminal that requested the limited-use credit card number and the device generating the limited-use credit card number may take place via a public network such as the Internet or via a dedicated communication link.

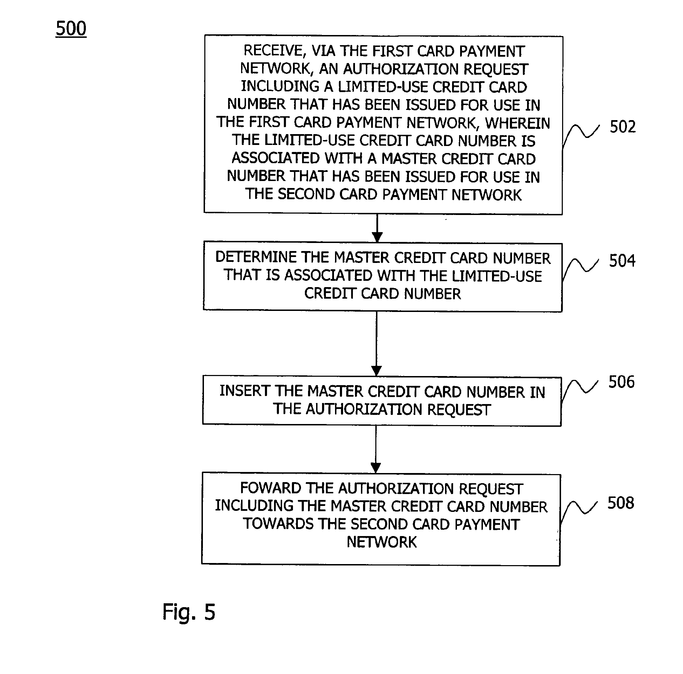

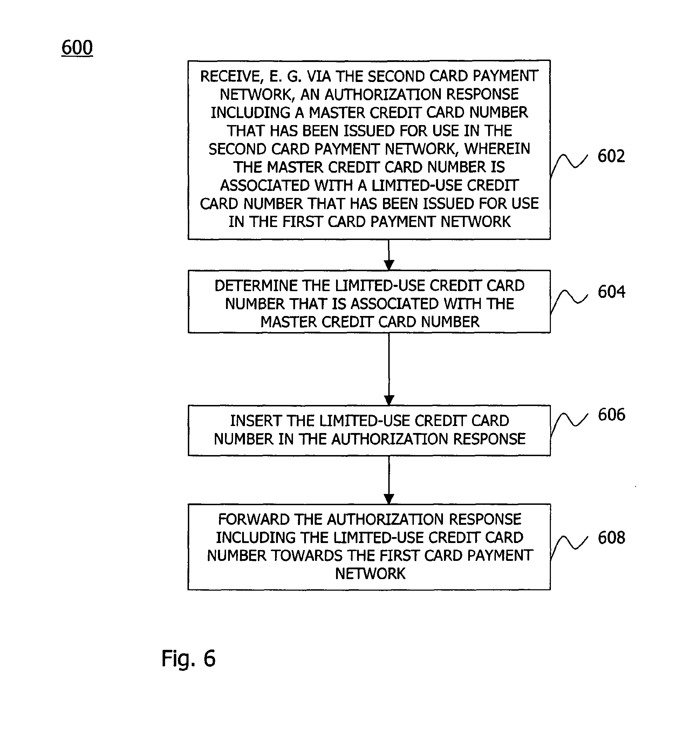

Once the terminal has received the limited-used credit card number (plus, optionally, any further credit card details associated with the limited-use credit card number), the terminal or any other network component communicating with the terminal may initiate the purchase of goods or services via an online shopping portal. When concluding the online purchase, the online shopping portal will request credit card details for initiating a card payment transaction. As has been mentioned above, in the present embodiment it is assumed that the online shopping portal is configured to not accept the master credit card that is of a type that has been issued for use in the second card payment network. Rather, the online shopping portal is configured to only accept credit cards of a type issued for use in the first card payment network, such as the limited-use credit card number. Accordingly, the limited-use credit card number plus, if required, any further credit card details of the limited-use credit card will have to be entered into an electronic payment form and sent to the online shopping portal. In order to prevent or at least reduce credit card fraud, the online shopping portal will then initiate an authorization process as generally illustrated in Figs. 5 and 6.

Fig. 5 shows a schematic flowchart 500 of an authorization process initiated by the online shopping portal once an online purchase has been requested based on the limited-use credit card number. As already explained above, the online shopping portal will generally not be able to determine whether the credit card number received from a user terminal is of the limited-use type or of the master type. Typically, the online shopping portal can only determine that the entered credit card number is for use in the first card payment network, and will therefore route the corresponding authorization request into the first card payment network.

Referring to Fig. 5, in a first step 502 the authorization request generated by the online shopping portal is received via the first card payment network. The authorization request includes the limited-use credit card number that has been generated earlier (as described in context with Fig. 4) for use in the first card payment network. The authorization request may include further data such as details of the card payment transaction that is to be authorized (including but not limited to a monetary purchase amount and an identifier indicative of the online shopping portal). As has already been explained above with reference to Fig. 4, the limited-use credit card number included in the authorization request is associated with a master credit card number that has been issued for use in the second card payment network. However, the master credit card number will generally not be included in the authorization request as it has not been disclosed to the online shopping portal that initiated the authorization request. This hiding of the master credit card number and any other details associated therewith enhances the payment security.

As the master credit card number is not yet included in the authorization request, step 504 determines the master credit card number associated with the limited-use credit card number for which authorization is requested. To this end, the master credit card number may be looked-up in a database or determined in any other way.

In a next step 506, the master credit card number thus determined is inserted in the authorization request. The insertion may be performed such that the format of the authorization request is not changed. Preferably, the authorization request then includes the master credit card number in addition to the limited-use credit card number. However, in certain scenarios it might be desirable to replace the limited-use credit card number with the master credit card number.

In a further step 508, the authorization request including the master credit card number is forwarded towards the second card payment network for authorization processing. Within the second card payment network, authorization processing may thus be performed on the basis of the master credit card number plus any additional credit card details associated therewith and included in the authorization request.

In the second card payment network, there typically exists a designated component performing authorization processing triggered by receipt of the authorization request forwarded in step 508. This component generates an authorization response and sends this generation response to an entity such as the device 200 shown in Fig. 2 for further processing. This further processing is illustrated in the schematic flowchart 600 of Fig. 6.

In a first step 602, the authorization response including the master credit card number that has been issued for use in the second card payment network is received. In addition to the master credit card number, the authorization response typically includes an indication of the authorization result indicating if the authorization has been granted or denied. The master credit card number included in the authorization response is associated with a limited-use credit card number that has been issued for use in the first card payment network as explained above.

If the authorization response already includes, in addition to the master credit card number, the associated limited-use credit card number, it may be directly sent back via the first card payment network to the online shopping portal that requested authorization of the card payment transaction. Otherwise, steps 604 to 608 may be performed. It should be noted that steps 604 to 608 could also be performed if the authorization response already includes the limited-use credit card number. Such a requirement for steps 604 to 608 exists for example in the case the limited-use credit card number is only included in a certain percentage of the received authorization responses or if it is included in an unsuitable format or at an unsuitable place within the authorization response.

In step 604, the limited-use credit card number that is associated with a master credit card number included in the authorization response is determined. Again, this determination may include looking-up the master credit card number in a database or in any other suitable storage medium.

In a next step 606, the limited-use credit card number thus determined is inserted in the authorization response. Insertion of the limited-use credit card number in the authorization response may be performed such that the master credit card number is overwritten. Thus, the format of the authorization response can essentially be maintained. Alternatively, the master credit card number may simply be deleted from the authorization response. Removing the master credit card number from the authorization response is again performed to reduce the exposure of this sensible information to the public.

Once the limited-use credit card number has been inserted in the authorization response and, optionally, once the master credit card number originally included therein has been removed, the authorization response thus processed is forwarded towards the first card payment network. Within the first card payment network, the limited-use credit card number is recognized again and can thus be utilized for routing the authorization response to the online shopping portal that originally requested authorization. Based on the authorization response, and in particular on the result of the authorization, one or both of the first card payment network and the online shopping portal can take appropriate actions.

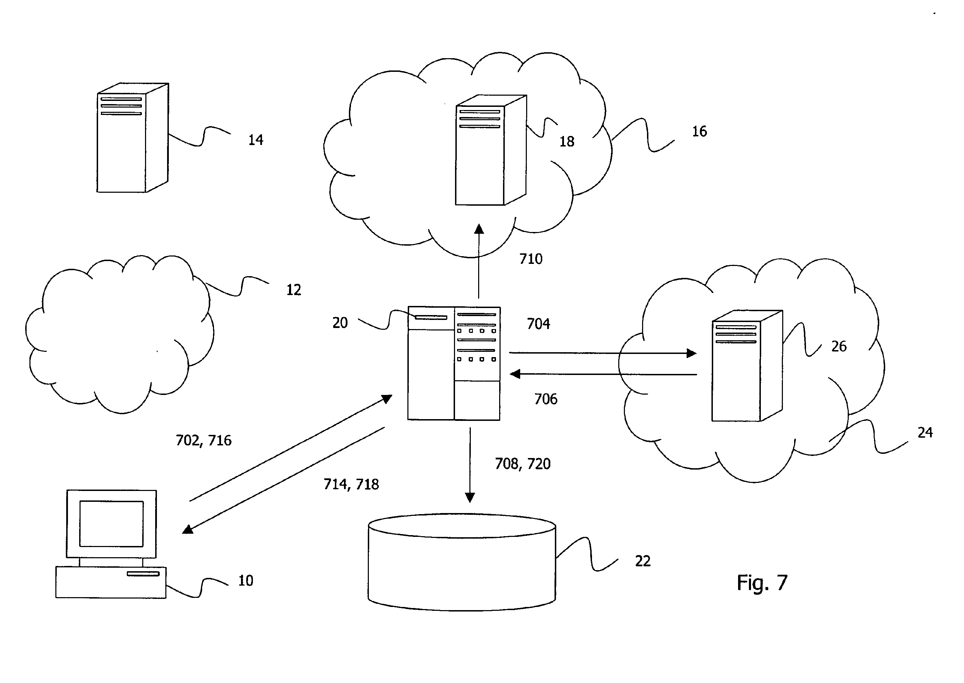

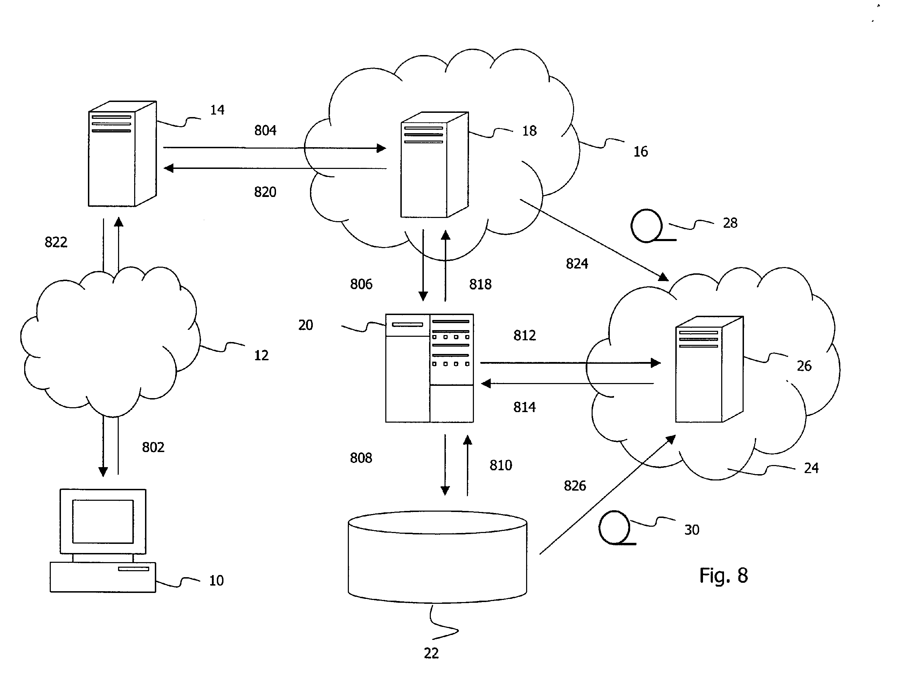

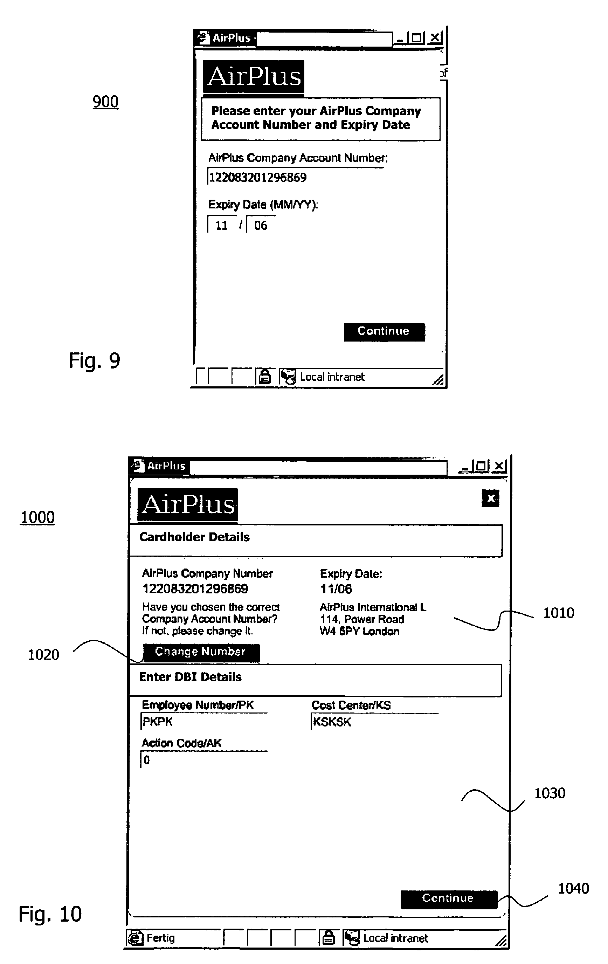

In the following, a further embodiment of the present invention will be described with reference to the networks, network components and messaging steps illustrated in Figs. 7 and 8 as well as the graphical user interfaces illustrated in Figs. 9 to 12. Fig. 7 shows the process of generating a new limited-use credit card number, whereas Fig. 8 illustrates the use of a newly generated limited-use credit card number for authorization and settlement processing in context with a card payment transaction.

The scenario shown in Figs. 7 and 8 includes a user terminal 10 that can be coupled via a network 12 to a server 14 hosting an online shopping portal. The user terminal 10 can be constituted by a conventional personal computer, by a mobile appliance such as a pocket computer or any other network component that can act as a client with respect to the server 14. The network 12 will typically be the Internet or any other public and thus inherently insecure network.

The server 14 hosting the online shopping portal is configured to accept credit card payments involving a first credit card type such as MasterCard ®. The resulting card payment transaction will be routed to a first card payment network 16 with a corresponding network server 18.

The network server 18 provided in the first card payment network 16 is configured to communicate with an interconnection server 20 having an associated database 22. The interconnecting server 20 additionally communicates with the user terminal 10 and a second card payment network (such as an UATP network). More precisely, the interconnecting server 20 communicates with a network server 26 located within the second card payment network 24.

In the following description, it will be assumed that the server 14 hosting the online shopping portal is configured to only accept credit cards of the Master Card ® type conventionally processed in the first card payment network 16, whereas the operator of the user terminal 10 has only access to a credit card (or at least a credit card number) of the UATP type conventionally processed in the second card payment network 24. Under normal circumstances, the operator of user terminal 10 would thus be prevented from a purchase at the online shopping portal hosted by the server 14.

In the present embodiment, an approach is provided for interconnecting the two card payment networks 16, 24 in such a manner that the restricted credit card acceptance of the server 14 will not prevent the operator of the user terminal 10 from an online purchase. The core idea behind this approach is the establishment of an association between a first credit card number for routing through the first card payment network 16 on the one hand and a second credit card number that has been issued for use in the second card payment network 24 on the other hand. In the following description, it will be assumed that the credit card number issued for the second card payment network is the master credit card number and that the credit card number that is to be newly generated for use in the first card payment network 16 is a limited-use credit card number. The credit card number for use in the first card payment network could alternatively be a conventional credit card number without any particular usage limitations.

In Fig. 7, the core component for establishing and controlling such an association is the interconnecting server 20. The functions of the interconnecting server 20 will now be described in more detail.

As has become apparent from the above, the user terminal 10 needs to first obtain a limited-use credit card number that is known in the first card payment network (and that is of a type accepted by the online shopping portal hosted on the server 14) before an online purchase via the online shopping portal can be concluded. In order to obtain such a limited-use credit card number for use in the first card payment network 16, the network terminal 10 sends a generation request message 702 as shown in Fig. 7 to the interconnecting server 20. The generation request message 702 includes the master credit card number as well as the expiry date of the master credit card number.

Before the generation request message 702 can be generated by the user terminal 10, the operator of the user terminal 10 is requested by a software installed on the user terminal 10 or hosted by the interconnecting server 20 to input the required details of the master credit card. Fig. 9 shows a user interface 900 for requesting the input of the corresponding details from the operator. The data field titled "Airplus Company Account Number" requests the operator to input the master credit card number, and the data field "Expiry Date" requests from the operator the expiry date of the master credit card number. In the present embodiment, the "Company Account" number is identical with the master credit card number.

The generation request message 702 can be sent to the interconnecting server via any communications link. Due to the sensitive nature of the master credit card details, the generation request message 702 is preferably not sent via the public network 12 but via a secure connection directly established between the user terminal 10 and the interconnecting server 20.

In a next step, the interconnecting server 20 receives the generation request message 702 including the master credit card number and the corresponding expiry date from the user terminal 10. Before generating the requested limited-use credit card number for use in the first card payment network 16, the interconnecting server 20 initiates a screening of the master credit card number and the corresponding expiry date. As these details of the master credit card can only be evaluated based on information available in the second credit card network 24, the interconnecting server 20 generates a screening request message 704 (including the master credit card number and the expiry date).

The screening request message 704 is sent from the interconnecting server 20 to the network server 26 located in the second card payment network 24. Upon receipt of the screening request message 704, the network server 26 determines whether or not the master credit card associated with the master credit card number indicated in the screening request message 704 is eligible for the generation of a limited-use credit card number. In this context, the network server 26 determines whether the master credit card number is existent, whether the master credit card is temporarily or permanently blocked, whether the expiry date is correct and lies in the future, and whether the corresponding master card has actually been activated for being associated with a limited-use credit card number. Activation of a master credit card for being associated with a limited-use credit card number may be performed via a flag that is set in the corresponding master credit card data record maintained within the second card payment network 24 at the network server 26.

Based on a result of the screening process, the network server 26 creates a screening response message 706 including a positive or negative screening response. The screening response message 706 additionally includes address data associated with the master credit card and an indication of a set of user-specific data fields associated with the master credit card number. These user-specific data fields have previously been defined by the holder of the master credit card or of the associated account. Once obtained, the corresponding user-specific data may, for example, appear on every account statement relating to the master credit card. Such user-specific data typically includes auxiliarily transaction information such as a cost center, an employee number, and an action code. Upon receipt of the master credit card number in the screening request message 704, the network server 26 automatically looks up the user-specific data fields associated with the received master credit card number and includes an indication of these data fields (i.e. a request for particular auxiliarily transaction information) in the screening response message 706 before sending it to the interconnecting server 20.

Upon receipt of the screening response message 706, the interconnecting server 20 evaluates the screening response and, in the case of a positive screening response, generates the requested limited-use credit card number. At the same time, the interconnecting server 20 generates an association between the original master credit card number and the newly generated limited-use credit card number and stores this association as indicated by arrow 708 in an association list maintained within the database 22. In addition to the limited-use credit card number, the interconnecting server 20 at the same time generates an expiry date for the limited-use credit card number as well as a card verification code (typically a random value) that are also stored in the database.

At the same time, the interconnecting server 20 informs the network server 18 located within the first card payment network 16 via message 710 that a new limited-use credit card number for use in the first card payment network 16 has been issued. The network server 18 maintains a list of all such limited-use credit card numbers that have been issued for a master credit card number belonging to the second card payment network 24. This list can later be used for routing to the interconnecting server 20 any messages relating to a card payment transaction that involves the limited-use credit card number.

Before forwarding the newly generated limited-use credit card number and the corresponding expiry date and card verification code to the user terminal 10, the interconnecting server 20 sends a message 714 including a request for user-specific data (as indicated in the screening response message 706) to the user terminal 10. In addition to an indication of the requested user-specific data, the request message 714 includes the address data received via the screening response message 706. The address data is in certain situations required for authorizing a card payment transaction. This authorization feature is also called address verification service (AVS).

Upon receipt of the request message 714 including an indication of the required user-specific data and the AVS address data, the user terminal 10 displays a user interface 1000 as shown in Fig. 10. In the upper part 1010 of this user interface 1000, details of the master credit card, namely the master credit card number, the expiry date and the AVS address data included in the message 714 are displayed. In context with the displayed AVS address data, the operator of the user terminal 10 is asked if the master credit card number originally input actually corresponds to the retrieved AVS data. Thereby, the operator can verify that he or she has input the correct master credit card number. Should the master credit card number that has originally been input be wrong, a button 1020 permits the input of a new master credit card number and the repetition of messaging steps 702 to 714.

In the lower part 1030 of the user interface 1000, the operator of the user terminal 10 is requested to enter the user-specific data (here called "DBI Details") as indicated in the request message 714. In the present embodiment, the requested data include the employee number, the cost center and the action code for which the limited-use credit card number is to be used. In general, each holder of a master credit card will have defined his own set of user-specific data. In other words, other master credit card numbers could be associated with a larger or a smaller (and generally different) set of user-specific data.

After the user has entered the user-specific data requested in the lower part 1030 of the user interface 1000, a "Continue" button 1040 can be activated to transfer the entered user-specific data via a transfer message 716 to the interconnecting server 20 as shown in Fig. 7. The transfer message 716 also includes the master credit card number. Upon receipt of the message transfer 716, the interconnecting server 20 updates the association between the master credit card number and the previously generated limited-use credit card number by adding the user-specific data included in the message transfer 716 in the corresponding data record stored in the database 22. This process is indicated by arrow 720.

Once the data record in the database 22 has been updated by the user-specific data, the interconnecting server 20 forwards the newly generated limited-use credit card number as well as the expiry data and the card verification code that have additionally been generated for the limited-use credit card number to the user terminal 10 via a further message 718.

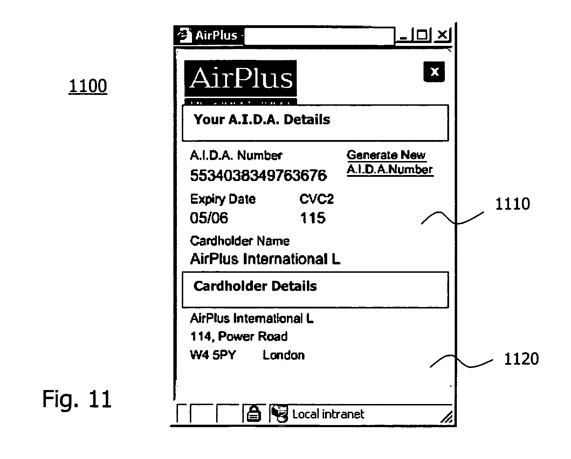

Upon receipt of the message 718, the user terminal 10 displays a user interface 1100 as shown in Fig. 11. In an upper part 1010 of the user interface 1100 various details of the newly generated limited-use credit card, here called "A.I.D.A. Details" are shown. These details include the limited-use credit card number ("A.I.D.A. Number") as well as the expiry date and the card verification code ("CVC 2") belonging to the limited-use credit card number. The name of the holder of the limited-use credit card will be displayed also. It will generally be identical with the name of the holder of the master credit card. In the lower part 1120 of the user interface 1100, address details relating to the holder of the limited-use credit card/master credit card (in the form of the AVS address data) are displayed.

The user terminal 10 now is in possession of a set of credit card details of a (fictitious) limited-use credit card that has been issued for use in the first card payment network. The user terminal 10 then connects, via the network 12, to the server 14 hosting the online shopping portal for performing an online purchase including a card payment transaction stretching between the first card payment network 16 and the second card payment network 24. The details of such a card payment transaction will now be discussed in more detail with reference to the scenario shown in Fig. 8.

Once the user terminal 10 is in possession of the limited-use credit card details, it can initiate, by one of a plurality of ways that are well known in the art, an online purchase via the online shopping portal hosted on the server 14. At a certain point of the online purchase, the user terminal 10 will be requested, by the server 14, to enter credit card details for concluding the online purchase. The credit details requested by the server 14 typically include the information displayed in the upper part 1110 of the user interface 1100 shown in Fig. 11.

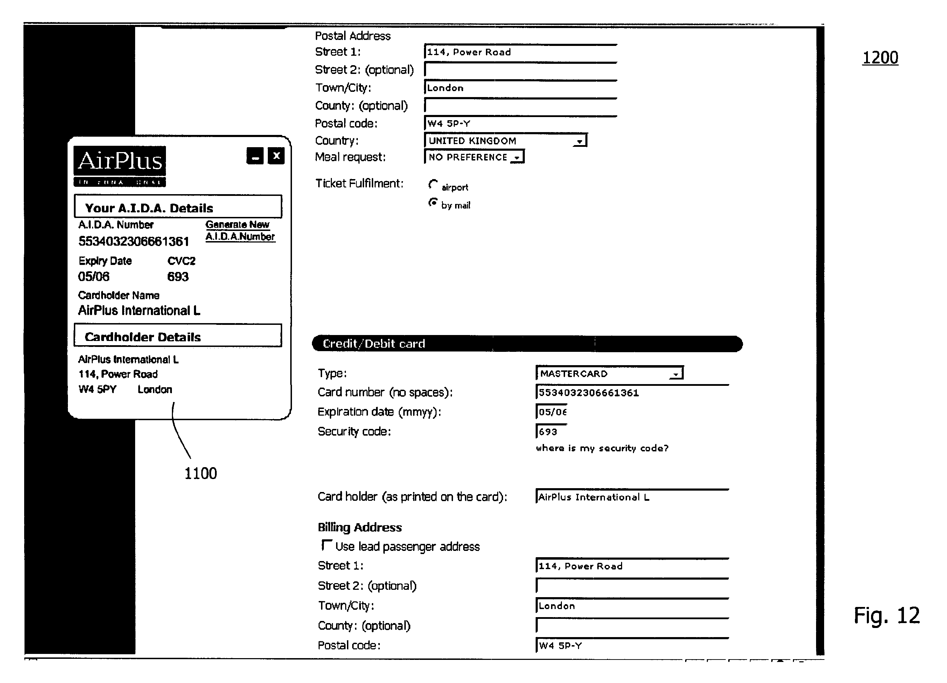

The user interface 1200 shown in Fig. 12 exemplarily shows the corresponding request form that will be displayed in this context by user terminal 10. As an insert of the user interface 1200, the user interface 1100 of Fig. 11 is shown. The user can thus conveniently transfer the details of the limited-use credit card shown in the user interface 1100 into the corresponding data fields of the user interface 1200. Alternatively, a program running on the user terminal 10 may be configured such that the details of the limited-use credit card are automatically entered into the corresponding data fields of the user interface 1200 upon generation of the user interface 1200 on the user terminal 10. Optionally, this program may automatically initiate the generation of limited-use credit card details as discussed above with reference to Fig. 7 if it is found, by parsing the code of user interface 1200, that the credit cards that are selectable via the user interface 1200 (see data field "Type:'") do not include the credit card type of the second payment network 24.

Once the credit card-related data requested by the user interface 1200 have been entered, the corresponding information is transferred in a message 802 from the user terminal 10 via the network 12 to the server 14. As the message 802 does not include any details of the master credit card, a layer of security is added to the card payment transaction.

Before confirming and concluding the online purchase, the operator of the online shopping terminal hosted by the server 14 will usually wish to authenticate the credit card details included in the message 802 to limit credit card fraud. To effectuate credit card authorization, the server 14 sends an authorization request message 804 into the card payment network corresponding to the credit card type selected via the user interface 1200 of Fig. 12.

In the present case, the server 14 determines that the credit card details included in the message 802 relate to a credit card type corresponding to the first card payment network 16. Accordingly the authorization request message 804 is sent from the server 14 hosting the online shopping portal to the network server 18 of the first card payment network 16. It should be noted that one or more further servers, such as a server belonging to the bank of the merchant operating the online shopping portal (not shown), may be included in the communication path between the server 14 and the server 18. In such a case, the bank server may perform the selective routing of the authorization request message 804 into the card payment network corresponding to the particular credit card type.

The authorization request message 804 received by the server 18 located within the first card payment network 16 includes the details of the limited-use credit card as entered via the user interface 1200 of Fig. 12, plus additional transaction data such as a monetary purchase amount and an identifier indicative of the merchant operating the server 14 and requesting the authorization.

Upon receipt of the authorization request message 804, the network server 18 determines based on the limited-use credit card number specified in the authorization request message 804 whether the authorization request is to be processed in the first card payment network 16 or in the second (or any further) card payment network 24. In this context the server looks-up whether the (limited-use) credit card number indicated in the authorization request message 804 corresponds to a credit card number that has been received via a message of message type 710 as explained above in relation to Fig. 7.

If the server 18 thus detects that the particular transaction for which an authorization is requested has in fact to be authorized outside the first card payment network 16, the server 18 forwards the authorization request to the interconnecting server 20. The credit card number included in the authorization request message 804 is thus used for routing the authorization request message 804 through the first card payment network 16 to the interconnecting server 20. In the embodiment shown in Figs. 7 and 8, the interconnecting server 20 is located outside the first card payment network 16. It may, however, also be a component located inside the first card payment network 16.

In Fig. 8, the authorization request message forwarded by the server 18 of the first card payment network 16 to the interconnecting server 20 is denoted by the reference numeral 806. The interconnecting server 20 thus receives, via the first card payment network 16, the authorization request message 806 that includes details of the limited-use credit card and transaction details. If required, the authorization request message 806 may include additional data inserted by the server 18 of the first card payment network 16.

Upon receipt of the authorization request message 806, the interconnecting server 20 first determines if the requested card payment transaction has to be rejected already by the interconnecting server 20 (i.e. already prior to an authorization check in the second card payment network 24). There are various reasons why the card payment transaction that is to be authorized might already be denied by the interconnecting server 20. First, the interconnecting server 20 may find that use limitations associated with the limited-use credit card number apply. These use limitations may for example relate to a predefined number of possible uses and/or a predefined period of use. The limited-use credit card number may for example be issued for a maximum of three card payment transactions. Should the interconnecting server 20, based on use statistics maintained by the interconnecting server 20, find that the card payment transaction requested for the particular limited-use credit card number exceeds a predefined threshold of permitted transactions, or does not fall within the predefined period of use, the interconnecting server 20 will reject the requested transaction and sent a rejection message.

Such a rejection message will also be generated by the interconnecting server 20 should the card verification code or expiry date included in the message 806 be wrong (i.e. not correspond to the card verification code or expiry date originally assigned to the limited-use credit card number). Of course, a rejection message will also be generated by the interconnecting server 20 should the limited-use credit card number be non-existent or wrong. In the context of the above operations, the interconnecting server 20 accesses the database 22 to retrieve for the limited-use credit card number included in the message 806 the corresponding information (usage statistics, card verification code, expiry date, etc.) available in the database 22. Additionally, the interconnecting server 20 retrieves details of the master credit card (such as the number, the expiry date and the card verification code of the master credit card) from the database 22. These database operations are indicated in Fig. 8 by arrows 808 and 810.

Should the interconnecting server 20 determine that the card payment transaction that is to be authorized need to be rejected, it sends corresponding rejection messages (not shown in Fig. 8) preferably both to the network server 18 of the first card payment network 16 as well as to the network server 26 of the second card payment network 24. The rejection message in each case includes at least a rejection code and one or more details of the limited-use credit card. The rejection message that is sent to the server 26 located in the second card payment network 24 additionally includes the retrieved master credit card number plus, optionally, any further details of the master credit card. Based on the received rejection message and its respective content, each of the servers 18, 26 may then take the appropriate action. The server 18 located in the first card payment network may for example forward the rejection message (in an unprocessed or processed form) to the server 14 hosting the online shopping portal. The server 14 will then inform the user terminal 10 that the requested card payment transaction has been denied. The server 26 of the second card payment network 24 may update a locally maintained rejection statistics.

If, on the other hand, the interconnecting server 20 determines that the card payment transaction that is to be authorized fullfills the criteria set forth above, it inserts the master credit card number, the expiry date associated with the master credit card number and, optionally, the card verification code associated with the master credit card number (that have previously been retrieved from the database 22 as indicated by arrow 810) in the authorization request. This insertion is preferably performed such that in the authorization request message 806 the details of the limited-use credit card are overwritten by the corresponding details of the master credit card. Additionally, the limited-use credit card number may again be inserted in another data field of the authorization request message 806. Such an approach enhances the system interoperability as existing message formats and messaging protocols (with predefined data fields for the individual credit card details) can be used further on. However, other approaches that require the definition of new message formats or messaging protocols could be employed as well.

Once the details of the master credit card have been inserted into the authorization request message 806, the interconnecting server 20 forwards the authorization request message 806 thus processed to the server 26 located in the second card payment network 24. In Fig. 8, the authorization request message forwarded to the server 26 is denoted by reference numeral 812. The authorization request message 812 will still include the transaction data of the authorization request message 806.

Upon receipt of the authorization request message 812 by the server 26 within the second card payment network 24, the server 26 evaluates an authorization of the requested card payment transaction. This evaluation can be based on at least one of the transaction data and the master credit card details included in the authorization request message 812. For example, the server 26 will determine whether the master credit card number exists and is not blocked, whether the expiry date of the master credit card lies in the future and whether the associated card verification code is correct. As for the transaction data received via the authorization request message 812, the server 26 will determine, based on the monetary transaction value, if settlement of the requested card payment transaction would violate any limitations of the corresponding customer account. With respect to the transaction data, the server 26 will additionally evaluate the identifier indicative of the requestor of the authorization (i.e. the merchant operating the online shopping portal). It can thus be determined if the requestor is actually eligible for the particular card payment transaction that involves the two card payment network 16, 24.

Depending on the result of the authorization, the server 26 generates an authorization response message 814 that includes a corresponding authorization approval code in a format as specified by a first card payment network standard. The authorization approval code indicates that the requested authorization for the card payment transaction has either been granted or denied. In addition to the authorization approval code, the authorization response message 814 includes the credit card details of at least the master credit card.

Upon receipt of the authorization response message 814 by the interconnecting server 20, and before forwarding the authorization response message 814 towards the first card payment network 16, the interconnecting server 20 determines the limited-use credit card number and other details of the limited-use credit card that are associated with the master credit card number indicated in the authorization response message 814. To this end, the interconnecting server 20 may look up the corresponding limited-use credit card details in the database 22.

In a next step, the interconnecting server 20 replaces the master credit card details (credit card number, expiry date and, optionally, card verification code) included in the authorization response message 814 with the corresponding limited-use credit card details looked up in the database 22. The authorization response message will then no longer include any master credit card details but only the corresponding details of the limited-use credit card.

The authorization response message 818 thus generated will be transmitted to the network server 18 of the first payment network where the authorization approval code included in the authorization response message 818 is evaluated. Based on a result of the evaluation, further action may be taken within the first card payment network 16. In a next step, the server 18 forwards the authorization response message, as indicated by reference numeral 820, out of the first card payment network 16 and (optionally via a bank server) to the component that originally requested authorization of the card payment transaction, namely the server 14 hosting the online shopping portal.

The server 14 then informs the user terminal 10, via message 822, about the result of the authorization. In the case authorization has been granted, message 822 confirms the card payment transaction. On the other hand, if authorization has been denied, message 822 requests from the operator of the user terminal 10 to check the originally entered details of the limited-use credit card number.

If, based on the authorization approval code included in the authorization response message 818, the server 18 of the first card payment network 16 determines that the card payment transaction has been approved, it initiates, within the first card payment network 16, further steps in connection with settlement of the requested card payment transaction. In this context, the server 18 generates a common settlement file 28 for one or more card payment transactions associated with one or more limited-use credit card numbers belonging to a single customer account within the second card payment network 24. The settlement file includes the relevant transaction data and the respective limited-use credit card details. As indicated by arrow 824, the settlement files 28 are transferred (individually or in batch processes) from the first card payment network 16 to the second card payment network 24. The server 26 in the second card payment network 24 may then, for each settlement file 28, locally retrieve the corresponding master credit card number and perform settlement processing based on the content of the settlement file and the respective master credit card numbers associated with the limited use credit card numbers as indicated in the settlement files.

Additionally, the second card payment network 24 regularly receives data excerpts 30 from the database 22. These data excerpts 30 include the previously captured user-specific data (as discussed in context with step 720 of Fig. 7) together with the corresponding master credit card number and/or limited-use credit card number.

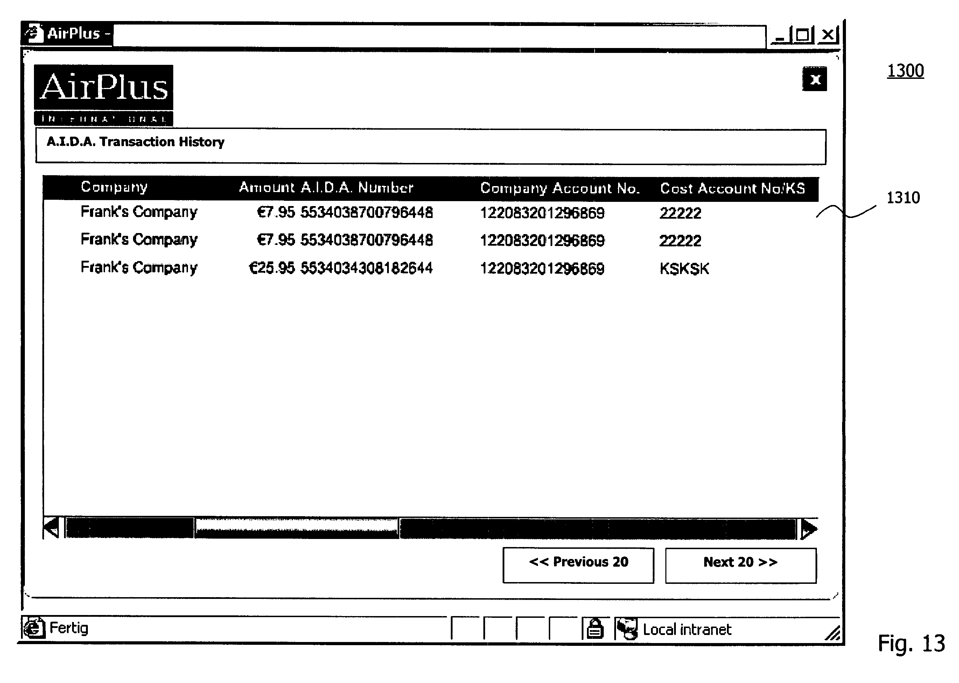

Based on the received data excerpt 30, the server 26 in the second card payment network 24 may thus generate and locally store an electronic or paper-based account statement for each settled card payment transaction. Fig. 13 shows a user interface 1300 that illustrates an electronic account statement that has been generated by the server 26 based on the contents of one or more settlement files 28 and one or more data excerpts 30. The electronic account statement 1310 shown in Fig. 13 lists three settled card payment transactions. For each card payment transaction, at least the following information is displayed: the company (card holder); the monitory transaction amount; the limited-use credit card number associated with the transaction ("A.I.D.A. Number "); the master credit card number ("Company Account No.''); and the user-specific data ("Cost Account No/KS'') that has been input by the operator of the user terminal 10 in context with the generation of a new limited-use credit card number.

While the current invention has been described in relation to its preferred embodiments, it is to be understood that this disclosure is only illustrative. Accordingly, it is intended that the invention be limited only by the scope of the claims appended hereto.

## Claims

1. A method of authorizing a card payment transaction involving a first card payment network (16) and a second card payment network (24), the method comprising:
- receiving, via the first card payment network (16), an authorization request including a limited-use credit card number that has been issued for use in the first card payment network (16), wherein the limited-use credit card number is associated with a master credit card number that has been issued for use in the second card payment network (24);
- determining the master credit card number that is associated with the limited-use credit card number;
- inserting the master credit card number in the authorization request; and
- forwarding the authorization request including the master credit card number towards the second card payment network (24).

2. The method of claim 1, further comprising
- determining, within the first card payment network (16) and based on the limited-use credit card number, if the authorization request is to be processed in the first card payment network (16) or in the second card payment network (24); and
- routing the authorization request to a component (20) performing one or more of the steps of claim 1 in the case it is determined that the authorization request is to be processed in the second card payment network (24).

3. The method of claim 1 or 2, further comprising
- determining an expiry date associated with the master credit card number; and
- inserting the expiry date associated with the master credit card number in the authorization request.

4. The method of one of the preceding claims, further comprising
- determining if use limitations associated with the limited-use credit card number apply; and
- sending a rejection message should the use-limitations apply.

5. A method of authorizing a card payment transaction involving a first card payment network (16) and a second card payment network (24), in particular according to one of the preceding claims, the method comprising:
- receiving an authorization response including a master credit card number that has been issued for use in the second card payment network (24), wherein the master credit card number is associated with a limited-use credit card number that has been issued for use in the first card payment network (16);
- determining the limited-use credit card number that is associated with the master credit card number;
- inserting the limited-use credit card number in the authorization response; and
- forwarding the authorization response including the limited-use credit card number.

6. The method of claim 5, further comprising
- determining an expiry date associated with the limited-use credit card number; and
- inserting the expiry date associated with the limited-use credit card number in the authorization response.

7. The method of claim 5 or 6, further comprising
removing at least one of the master credit card number and an expiry date associated with the master credit card number from the authorization response prior to forwarding.

8. The method of one of claims 5 to 7, further comprising
routing the authorization response via the first card payment network (16) to a component (14) that requested authorization of the card payment transaction.

9. The method of one of the preceding claims, further comprising
- receiving, within the second card payment network (24), the authorization request including the master credit card number and further including transaction data relating to the card payment transaction that is to be authorized;
- evaluating an authorization of the card payment transaction based at least on the transaction data included in the authorization request; and
- generating the authorization response based on a result of the evaluation.

10. The method of claim 9, wherein
the transaction data include an identifier indicative of a requestor of the authorization, and wherein evaluating the authorization includes evaluating based on the identifier if the requestor is eligible for the card payment transaction.

11. A method of generating a limited-use credit card number for a card payment transaction involving a first card payment network (16) and a second card payment network (24), and in particular for use in an authorization method according to one of the preceding claims, the method comprising:
- receiving a generation request for generation of a limited-use credit card number for use in the first card payment network (16), the generation request being associated with a master credit card number that has been issued for use in the second card payment network (24);
- generating the requested limited-use credit card number; and
- forwarding the limited-use credit card number to a component (10) that requested the generation of the limited-use credit card number.

12. The method of claim 11, further comprising
generating and storing an association between the master credit card number and the generated limited-use credit card number.

13. The method of claim 11 or 12, further comprising
- generating an expiry date for the limited-use credit card number; and
- forwarding the expiry date for the limited-use credit card number to the component (10) that requested generation of the limited-use credit card number.

14. The method of one of claims 11 to 13, further comprising
- sending a screening request including the master credit card number towards the second card payment network (24);
- receiving a screening response from the second card payment network (24); and
- evaluating the screening response and generating the limited-use credit card number only in the case of a positive screening response.

15. The method of claim 14, further comprising
- receiving, within the second card payment network (24), the screening request including the master credit card number;
- determining whether the received master credit card number is eligible for generation of a limited-use credit card number for use in the first card payment network (16); and
- creating the screening response based on a result of the determination.

16. The method of one of claims 11 to 15, further comprising
- sending a request for user-specific data to the component (10) that requested generation of the limited-use credit card number;
- receiving the user-specific data from the component (10); and
- assigning the received user-specific data to the generated limited-use credit card number.

17. The method of claim 16, further comprising
- determining, within the second card payment network (24), a set of user-specific data fields associated with the master credit card number; and
- generating the request for user-specific data, wherein the request includes a specification of the user-specific data fields associated with the master credit card number.

18. The method of claim 16 or 17, wherein
sending the request for user-specific data to the component (10) comprises
- receiving the request for user-specific data via the second card payment network (24); and
- forwarding the request for user-specific data received via the second card payment network (24) to the component (10).

19. The method of claim 18, wherein
the request for user-specific data received from the second card payment network (24) is included in the generation response.

20. The method of one of claims 16 to 18, further comprising
- receiving the requested user-specific data;
- collecting the received user-specific data together with the respectively assigned limited-use credit card number in a database (22); and
- transferring the collected user-specific data together with at least one of the respectively assigned limited-use credit card number and master credit card number towards the second card payment network (24).

21. The method of any of the preceding claims, wherein
use of the limited-use credit card number is limited with respect to at least one of a predefined number of possible uses and a predefined period of use.

22. A computer program product comprising program code portions for performing the steps of one of claims 1 to 21 when the computer program product is run on one or more computers.

23. The computer program product of claim 22, stored on a computer-readable recording medium.

24. A device (100) for controlling an authorization process relating to a card payment transaction involving a first card payment network (16) and a second card payment network (24), the device (100) comprising:
- a first interface (102) adapted to receive, via the first card payment network (16), an authorization request including a limited-use credit card number that has been issued for use in the first card payment network (16), wherein the limited-use credit card number is associated with a master credit card number that has been issued for use in the second card payment network (24);
- a unit (104) adapted to determine the master credit card number that is associated with the limited-use credit card number and to insert the master credit card number in the authorization request; and
- a second interface (106) adapted to forward the authorization request including the master credit card number towards the second card payment network (24).

25. A device (200) for controlling an authorization process relating to a card payment transaction involving a first card payment network (16) and a second card payment network (24), in particular according to claim 24, the device (200) comprising:
- a first interface (202) adapted to receive an authorization response including a master credit card number that has been issued for use in the second card payment network (24), wherein the master credit card number is associated with a limited-use credit card number that has been issued for use in the first card payment network (16);
- a unit (204) adapted to determine the limited-use credit card number that is associated with the master credit card number and to insert the limited-use credit card number in the authorization response; and
- a second interface (206) adapted to forward the authorization response including the limited-use credit card number towards the first card payment network (16).

26. A device (300) for generating a limited-use credit card number for a card payment transaction involving a first card payment network (16) and a second card payment network (24), in particular for use by the network component according to claim 24 or 25, the device (300) comprising:
- a first interface (302) adapted to receive a generation request for generation of a limited-use credit card number for use in the first card payment network (16), the generation request being associated with a master credit card number that has been issued for use in the second card payment network (24);
- a generator (304) adapted to generate the requested limited-use credit card number; and
- a second interface (306) adapted to forward the limited-use credit card number to a component (10) that requested the generation of the limited-use credit card number.
